# EUROPEAN PATENT APPLICATION

(11) **EP 1 291 870 A1**
(43) Date of publication of application: **12.03.2003**
(21) Application number: 01934456.3
(22) Date of filing: 31.05.2001
(51) Int. Cl.: G11B 20/12, G11B 20/10, G11B 27/00, G10K 15/02, H04N 1/387, G06F 17/60, G06T 1/00

(54) **CONTENTS DATA, RECORDING MEDIUM, RECORDING METHOD AND DEVICE, REPRODUCING METHOD AND DEVICE**

(30) Priority: 01.06.2000 JP 2000164450; 14.07.2000 JP 2000214157
(71) Applicant: Sony Corporation, Tokyo 141-0001 (JP)
(72) Inventor: SAKO, Yoichiro, Sony Corporation, Tokyo 141-0001 (JP)
(74) Representative: Nicholls, Michael John
(86) International application number: JP0104600
(87) International publication number: WO01093267

(57) **Abstract**

Content data or a record medium composed of an encrypted data portion and a plain data portion, the encrypted data portion being composed of data of a content that has been encrypted, additional information data being embedded to the plain data portion, the additional information data containing information used for decrypting the data of the content that has been encrypted, the plain data portion being read before the encrypted data portion.

## Description

### Technical Field

The present invention relates to content data such as video data or audio data, a record medium on which content data is recorded, a recording method, a recording apparatus, a reproducing apparatus, a reproducing method, and a reproducing apparatus, in particular, to those that allow data of a content to be protected.

### Background Art

To protect the copyright of data of an audio content and a video content that are recorded to a record medium, a watermark of which copy management information as additional information is superimposed and embedded to the data of the contents is been developed. To accomplish such a watermark, a method for inserting additional information into a low order bit of a signal or a high order coefficient of compressed data, a method for inserting additional information using masking effect so that the additional information does not adversely affect a content, a method for spreading a spectrum of additional information using spectrum spreading and superimposing the spread spectrum to data of a content, a method for inserting additional information into a first peak or a second peak of a predetermined range or the vicinity thereof, and so forth are known.

When information that represents copy prohibition or copy prohibition is contained in a watermark, a copy prohibition and so forth can be managed with information of the watermark. From a viewpoint of copyright protection, a watermark is very valuable. As for information of a watermark, not only when it is copied as digital data, but when it is converted into an analog signal and then copied, the information of the watermark may be left in the analog signal. Thus, when analog data is copied, copyright information can be effectively protected.

However, to detect information of a watermark, a decoder that detects the watermark is required on a reproducing apparatus side. When the decoder, which detects the watermark, is disposed on the reproducing apparatus side, the circuit scale becomes large. Thus, the cost of the apparatus rises. In addition, although management information for copyright using a watermark is important for protecting the copyright, it is not always important for the user side who uses a content. Thus, even if a watermark is superimposed to data of a content recorded on a record medium, the watermark is not detected on the user's reproducing apparatus side. As a result, the copyright of the content may not be protected.

Moreover, data of a content may contain information of which the user should be notified. For example, a content of video data of a movie may contain a commercial of a company as a sponsor.

However, conventionally, when many users reproduce contents, they tend to skip commercial portions using a fast forward operation or the like. In this case, when the users skip the commercial portions, the companies as sponsors cannot sufficiently achieve the expected effects of the commercials. Thus, the companies as sponsors cannot recover the commercial costs that they have spent.

In a content such as a movie, a copyright notice screen initially appears. When the user reproduces the content, it is required that the user should be notified of the copyright notice.

However, when such a copyright notice screen appears, many users tend to skip it using a fast forward operation or the like. Thus, the users cannot be thoroughly notified of the copyright notice, copy prohibition notice, and so forth.

Therefore, an object of the present invention is to provide content data, a data record medium, a data recording method, a data recording apparatus, a data reproducing method, a data reproducing apparatus, a data transmitting method, and a data receiving method that allow copyright to be protected in such a manner that when information with respect to copyright protection that represents such as copy prohibition and reproduction prohibition has been recorded as a watermark along with a content, the information of the watermark is securely decoded when the content is reproduced.

Another object of the present invention is to provide content data, a data record medium, a data recording method, a data recording apparatus, a data reproducing method, a data reproducing apparatus, a data transmitting method, a data receiving method, and a data receiving apparatus that allow a portion of which the user should be notified to be securely reproduced.

### Disclosure of the Invention

The present invention is content data composed of an encrypted data portion and a plain data portion, the encrypted data portion being composed of data of a content that has been encrypted, additional information data being embedded to the plain data portion, the additional information data containing information used for decrypting the data of the content that has been encrypted, the plain data portion being placed at least before or after the encrypted data portion.

The present invention is content data composed of an encrypted data portion and a plain data portion, the encrypted data portion being composed of data of a content that has been encrypted, additional information data being embedded to the plain data portion, the additional information data containing information used for decrypting the data of the content that has been encrypted, the plain data portion being read before the encrypted data portion.

The present invention is a record medium, having:
a first record area in which encrypted data is recorded; and
a second record area placed at a position that allows the second record area to be read before the first record area, plain data being recorded in the second record area, additional information being embedded to the plain data, the additional information being used for decrypting the encrypted data recorded in the first record area.

The present invention is a recording method for a record medium, comprising the steps of:
adding to a first portion of data of a content that has been input additional information containing information used for performing a decryption;
performing an encrypting process for a second portion of the data of the content that has been input corresponding to the information used for performing the decryption; and
performing an encoding process for the first portion to which the additional information has been added and the second portion for which the encrypting process has been performed in such a manner that the first portion and the second portion are recorded to the record medium.

The present invention is a recording apparatus, comprising:
an additional information generating portion for generating additional information containing information used for performing a decryption;
an adding circuit portion for embedding the additional information generated by the additional information generating portion to a first portion of data of a content that has been input;
an encrypting process portion for performing an encrypting process for a second portion of the data of the content that has been input corresponding to the information used for performing the decryption;
an encoding process portion for multiplexing an output of the encryption process portion and an output of the adding circuit portion and performing an encoding process for the multiplexed data in such a manner that the encoded data is recorded to the record medium; and
a recording portion for recording an output of the encoding process portion to the record medium.

The present invention is a reproducing apparatus, comprising:
a head portion for scanning a record medium on which at least data of a content and index information thereof have been recorded, the data of the content having a first portion and a second portion, additional information containing information used for performing a decryption having been embedded to the first portion, an encrypting process corresponding to the information used for performing the decryption having been performed for the second portion;
an extracting portion for extracting the information used for performing the decryption from the first portion of the data of the content that has been read from the record medium by the head portion; and
a decrypting process portion for performing a decrypting process for the second portion of the data of the content that has been read from the record medium by the head portion corresponding to the information used for performing the decryption that has been extracted by the extracting portion.

The present invention is a reproducing method, comprising the steps of:
extracting information used for performing a decryption from a first portion of data of a content that has been read from a record medium on which at least the data of the content and index information thereof have been recorded, the data of the content having the first portion and a second portion, additional information containing the information used for performing the decryption having been embedded to the first portion, an encrypting process corresponding to the information used for performing the decryption having been performed for the second portion; and
performing a decrypting process for the second portion of the data of the content that has been read from the record medium corresponding to the information used for performing the decryption that has been extracted.

The present invention is a reproducing method for a record medium, comprising the steps of:
reading plain data from the record medium on which content data composed of data of a content for which an encrypting process has been performed and the plain data have been recorded, the plain data being placed at a position that allows the plain data to be read before the data of the content, at least information used for performing a decryption for the data of the content for which the encrypting process has been performed;
extracting the information used for performing the decryption from the plain data that has been read;
performing a decrypting process for the data of the content that has been read from the record medium corresponding to the information used for performing the decryption that has been extracted; and
outputting the reproduced output of the plain data and the data of the content for which the decrypting process has been performed.

The present invention is a reproducing method for data, comprising the steps of:
reading plain data from content data composed of data of a content for which an encrypting process has been performed and the plain data have been recorded, the plain data being read before the data of the content, at least information used for performing a decryption for the data of the content for which the encrypting process has been performed;
extracting the information used for performing the decryption from the plain data that has been read;
performing a decrypting process for the data of the content that has been read corresponding to the information used for performing the decryption that has been extracted; and
outputting the reproduced output of the plain data and the data of the content for which the decrypting process has been performed.

### Brief Description of Drawings

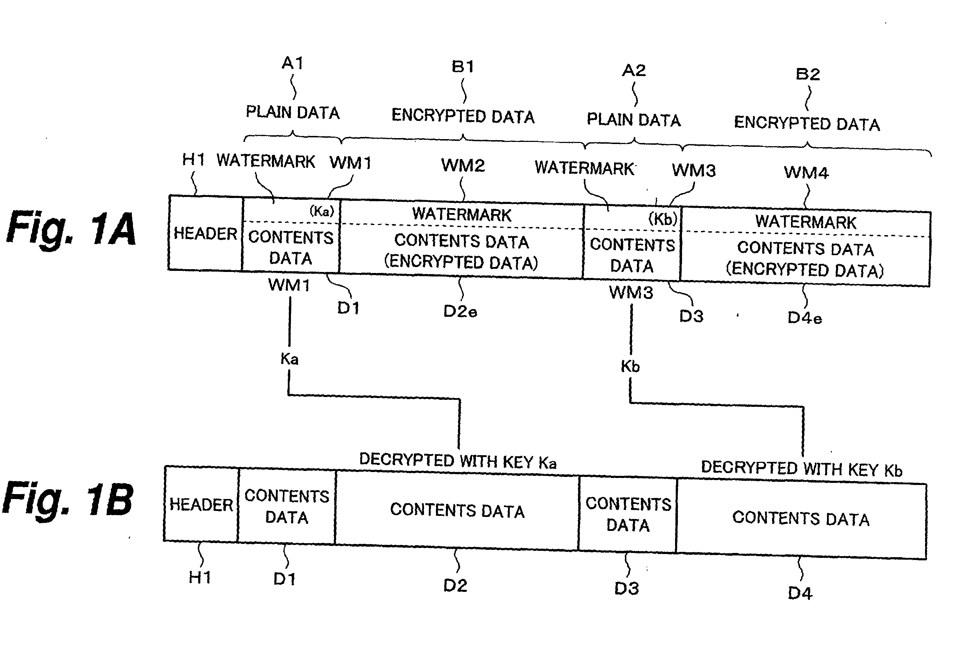

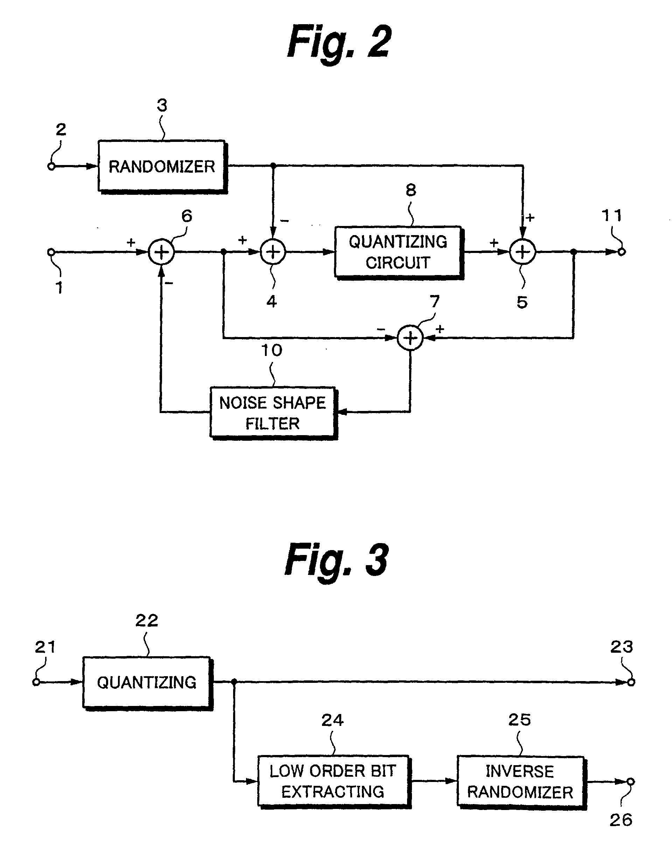

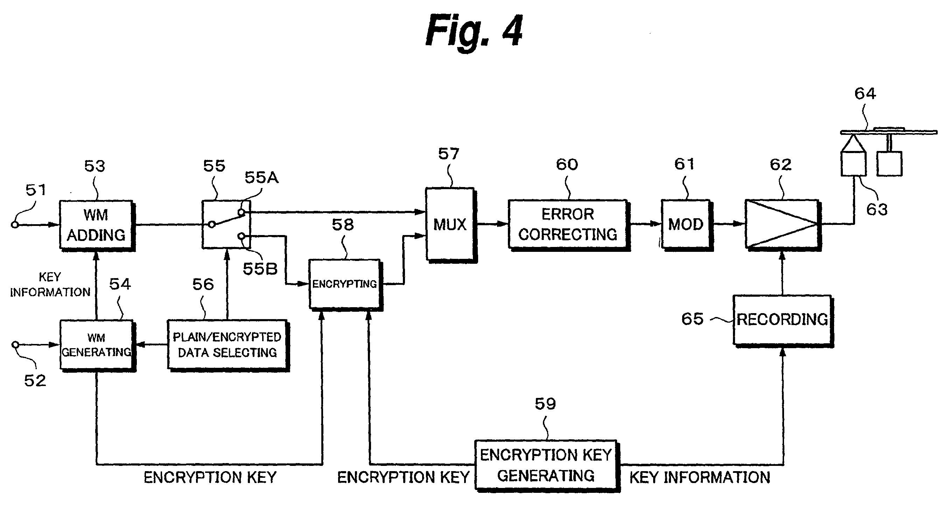

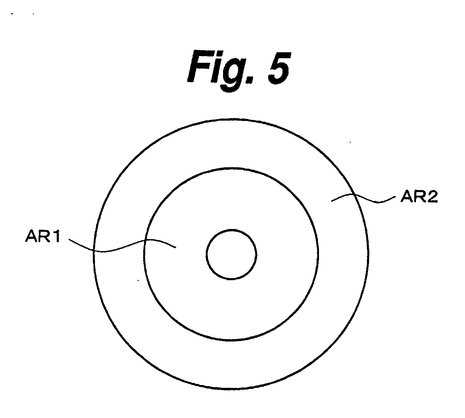

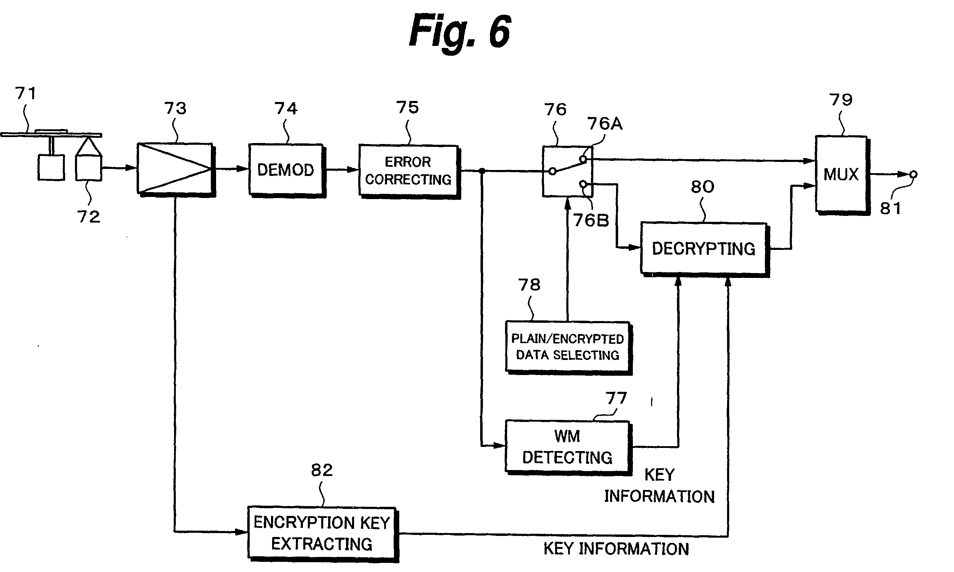

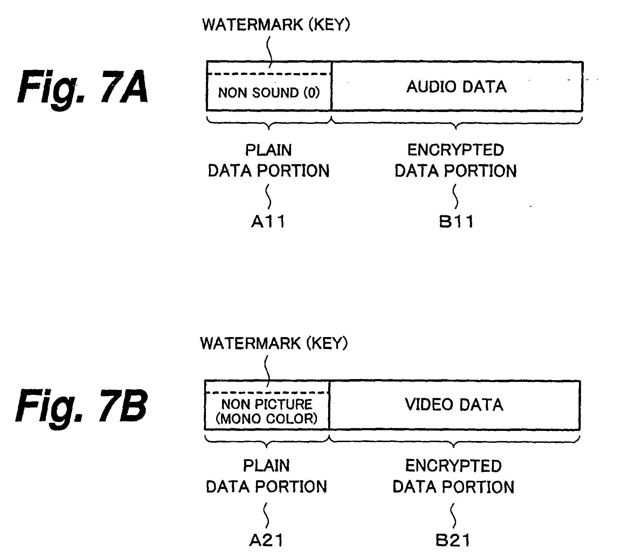

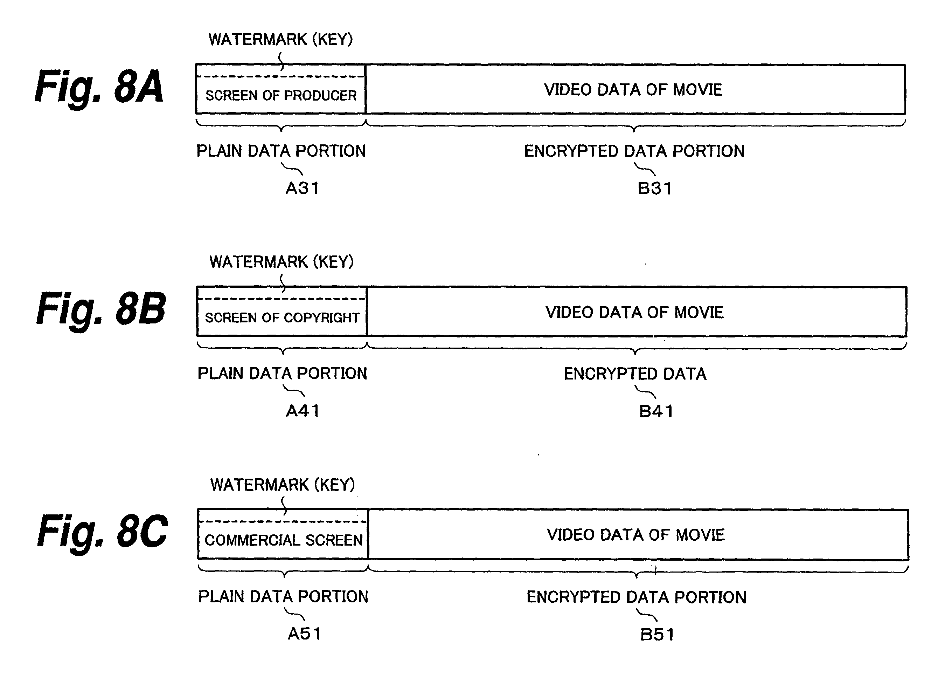

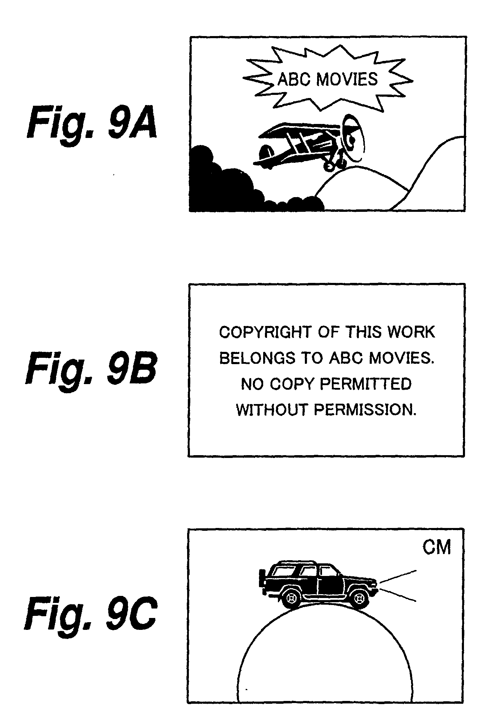

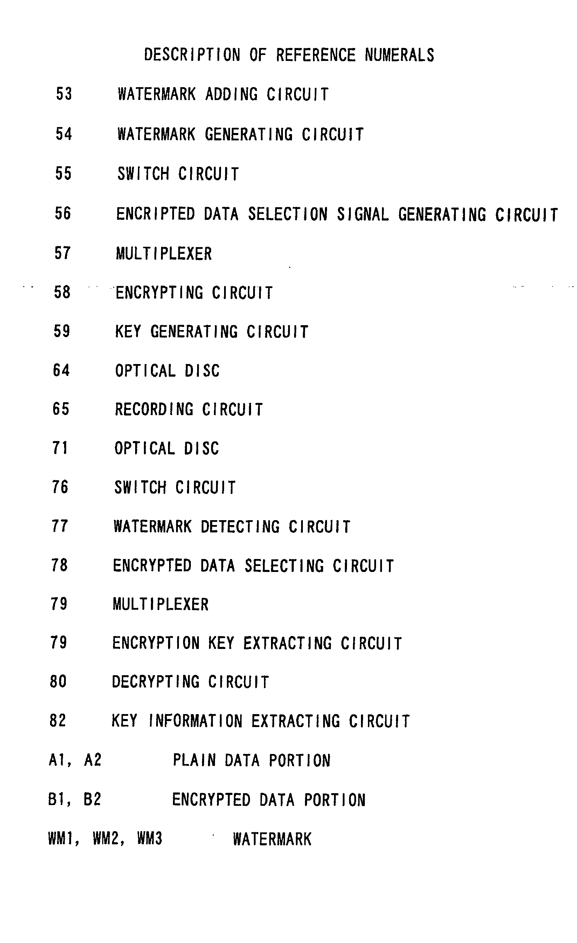

Fig. 1A and Fig. 1B are schematic diagrams for explaining an embodiment of the present invention; Fig. 2 is a block diagram showing an example of a watermark encoder; Fig. 3 is a block diagram showing an example of a watermark decoder; Fig. 4 is a block diagram showing an example of a data recording apparatus according to the present invention; Fig. 5 is a schematic diagram for explaining a data record medium; Fig. 6 is a block diagram showing an example of a data reproducing apparatus according to the present invention; Fig. 7A and Fig. 7B are schematic diagrams for explaining an embodiment of the present invention; Fig. 8A, Fig. 8B, and Fig. 8C are schematic diagrams for explaining the embodiment of the present invention; and Fig. 9A, Fig. 9B, and Fig. 9C are schematic diagrams for explaining the embodiment of the present invention.

### Best Modes for Carrying out the Invention

Next, with reference to the accompanying drawings, an embodiment of the present invention will be described. Fig. 1A and Fig. 1B show file structures of data of contents recorded on record mediums according to the present invention. In this embodiment, contents are for example music data, moving picture data, picture data, and games.

In Fig. 1A, at the beginning of a file of data of a content, a header H1 is placed. The header H1 is followed by a plain data portion A1, an encrypted data portion B1, a plain data portion A2, an encrypted data portion B2, ... and so forth.

In the plain data portions A1, A2, ..., and so forth, data of contents D1, D3, ..., and so forth are recorded. The data of contents D1, D3, ... and so forth recorded in the plain data portions A1, A2, ..., and so forth are so-called plain data that has not been encrypted.

In the encrypted data portions B1, B2, ..., and so forth, data of contents D2e, D4e, ..., and so forth are recorded. The data of contents D2e, D4e, .... and so forth are data of which the data of contents D2, D4, ..., and so forth have been encrypted, respectively.

In addition, in the plain data portions A1, A2, .., and so forth, watermark information WM1, WM3, ..., and so forth are superimposed to the data of content D1, D3, ..., and so forth and the resultant data is recorded, respectively. In the encrypted data portion B1, B2, ..., and so forth, the watermarks WM2, WM4, ..., and so forth are superimposed to the data of content D2e, D24e, ..., and so forth and the resultant data is recorded, respectively.

The watermark WM1, WM2, WM3, ..., and so forth contain copy management information, reproduction management information, and so forth. In addition, the watermarks WM1, WM3, ..., and so forth of the plain data portions A1, A2, ..., and so forth contain key information Ka, Kb, ..., and so forth used to decrypt the data of contents D2e, D4e, ..., and so forth of the encrypted data portions B1, B2, ..., and so forth preceded by the plain data potions A1, A2, ..., and so forth, respectively.

When the file is reproduced, first of all, the data of content D1 of the plain data portion A1 is reproduced. In addition, the watermark WM1 superimposed to the data of content D1 is detected. The key information Ka contained in the watermark WM1 is extracted therefrom.

Thereafter, the data of content D2e of the encrypted data portion B1 is reproduced. At that point, as shown in Fig. 1B, using the key information Ka contained in the watermark WM1 superimposed to the data of content D1 of the plain data portion A1, a decrypting process is performed for the data of content D2e that has been encrypted.

Next, the data of content D3 of the plain data portion A2 is reproduced. In addition, the watermark WM3 superimposed to the data of content D3 is detected. The key information Kb contained in the watermark WM3 is extracted therefrom.

Thereafter, the data of content D4e of the encrypted data portion B2 is reproduced. At that point, as shown in Fig. 1B, using the key information Kb contained in the watermark WM3 superimposed to the data of content D3 of the plain data portion A2, a decrypting process is performed for the data of content D4e that has been encrypted.

As described above, according to the embodiment of the present invention, the file of the data of the has the plain data portions A1 A2, ..., and so forth and the encrypted data portions B1, B2, ..., and so forth. In the plain data portions A1, A2, ..., and so forth, data of contents that has not been encrypted is recorded. In the encrypted data portions B1, B2, ..., and so forth, data of contents that has been encrypted is recorded. The watermarks WM1, WM3, ..., and so forth of the data of contents of the plain data portions A1, A2, ..., and so forth contain the key information Ka, Kb, ..., and so forth used to decrypt the data of contents of the encrypted data portions B1, B2, ..., and so forth, respectively.

Thus, in the file structures shown in Fig. 1A and Fig. 1B, when data of contents of the files is reproduced, information of the watermarks WM1, WM3, ..., and so forth superimposed to the data of contents of the plain data portions A1, A2, ..., and so forth is detected. Using the key information Ka, Kb, ..., and so forth of the information of the watermarks WM1, WM3, ..., and so forth, the data of contents of the encrypted data portions B1, B2, ..., and so forth should be decrypted. Thus, the information of the watermarks is always decrypted.

In a watermark, for example, information used for managing a copy operation (sometimes referred to as copy management information) and information used for managing a reproducing operation (sometimes referred to as reproduction management information) are recorded. Thus, according to the embodiment of the present invention, unless information of a watermark is detected, data of a content as an encrypted data portion cannot be reproduced. Thus, the information of the watermark is always reproduced. As a result, information used for managing a cope operation and a reproducing operation contained in the watermark is always obtained therefrom. As a result, the copyright of the content is securely managed with the watermark.

To add or embed a watermark to data of a content, a variety of methods have been proposed. For example, a method for spreading information of a watermark by spectrum spreading so as to superimpose the spread information to data of a content, a method for detecting a peak value of a signal of data of a content and inserting a watermark before and after a peak value so that the watermark does not adversely affect the data of the content, a method for inserting information of a watermark into a low order bit of data of a content, and a method for inserting information of a watermark into a high order coefficient of compressed data are known. Among them, using any method, a watermark may be added or embedded.

It is not necessary to designate what portion is a plain data portion, what portion is an encrypted data portion, how long is a plain data portion, how long is an encrypted data portion, how many plain data portions are, and how many encrypted data portions are.

Since an encrypted data portion of data of a content is decrypted with key information of a watermark embedded to a plain data portion of the data of the content, when a plain data portion is placed at a position that allows the plain data portion to be read before the encrypted data portion of the data of the content, a reproducing process including a decrypting process can be easily performed.

In particular, when a plain data portion is placed at a beginning portion of a file of data of a content, if all portions that are preceded by the plain data portion are encrypted data portions, key information used for decrypting the encrypted data portions being placed in a watermark embedded to the plain data portion at the beginning of the file, the process can be easily performed.

Alternatively, an encrypted data portion may be followed by a plain data portion. When a file is reproduced, the plain data portion may be read at first. In other words, it is not always necessary to place a plain data portion at a position that allows the plain data portion is followed by an encrypted data portion.

Fig. 2 shows an example of an encoder that inserts a watermark into data of a content. In the example, information of a watermark is inserted into a low order bit of data of a content. In the example shown in Fig. 2, a component of information of a watermark is inserted into a band in which the watermark does not adversely affect hearing sense when the data of content is audio data.

In Fig. 2, original data as data of a content (for example, audio data) is supplied to an input terminal 1. Data of a watermark is supplied to an input terminal 2.

The data of the watermark supplied from the input terminal 2 is supplied to a randomizer 3. The randomizer 3 causes the data of the watermark to become while noise. An output of the randomizer 3 is supplied to both a subtracting circuit 4 and an adding circuit 5.

The data supplied from the input terminal 1 is supplied to a subtracting circuit 6. An output of the subtracting circuit 6 is supplied to both the subtracting circuit 4 and a subtracting circuit 7. An output of the subtracting circuit 4 is supplied to a quantizing circuit 8. An output of the quantizing circuit 8 is supplied to the adding circuit 5.

The adding circuit 5 adds the output of the quantizing circuit 8 and the output of the randomizer 3. An output of the adding circuit 5 is output from an output terminal 11 and supplied to the subtracting circuit 7. The subtracting circuit 7 subtracts an output of the subtracting circuit 6 from the output of the adding circuit 5.

An output of the subtracting circuit 7 is supplied to a noise shape filter 10. An output of the noise shape filter 10 is supplied to the subtracting circuit 6. The subtracting circuit 6 subtracts the output of the noise shape filter 10 from the data supplied from the input terminal 1.

The watermark encoder shown in Fig. 2 inserts data of a watermark into a low order bit of audio data as data of a content. The watermark is inserted into a position that allows the data of the watermark does not adversely affect the hearing sense of the data of the content when it is reproduced.

In other words, in Fig. 2, audio data as data of a content supplied from the input terminal 1 is quantized by the quantizing circuit 8. The adding circuit 5 inserts data of the watermark supplied from the randomizer 3 into a low order bit of data that is output from the quantizing circuit 8.

On the preceding stage of the quantizing circuit 8, as was mentioned above, the subtracting circuit 4 is disposed. The subtracting circuit 4 subtracts the data of the watermark from the data that is supplied from the input terminal 1. In such a manner, on the preceding stage of the quantizing circuit 8, the data of the watermark is subtracted from the audio data as data of a content that is supplied from the input terminal 1. Thus, the influence of which the data of the watermark is inserted into the data of the content by the adding circuit 5 on the next stage of the quantizing circuit 8 is excluded.

The adding circuit 5 outputs data of which the data of the watermark has been added. The output of the adding circuit 5 is output from the output terminal 11. In addition, the subtracting circuit 7 subtracts output data of the subtracting circuit 6 from output data of the adding circuit 5. The subtracting circuit 7 subtracts output data of the quantizing circuit 8 from input data of the quantizing circuit 8 and obtains a noise component involved in the quantizing process. The noise shape filter 10 places the noise component to a position that allows the noise component does not adversely affect the hearing sense of the audio data as data of a content and supplies the resultant data to the subtracting circuit 6.

Fig. 3 shows an example of a watermark decoder that decodes information of a watermark inserted by the encoder shown in Fig. 2.

In Fig. 3, audio data as data of a content to which a watermark has been superimposed in the above-described manner is supplied to an input terminal 21. The data supplied from the input terminal 21 is supplied to a quantizing circuit 22. An output of the quantizing circuit 22 is output from an output terminal 23 and supplied to a low order bit extracting circuit 24.

The low order bit extracting circuit 24 extracts data of a watermark inserted into a low order bit of audio data as data of a content. The data of the watermark is supplied to an inverse randomizer 25.

The inverse randomizer 25 performs an inverse process of the randomizer 3 of the encoder shown in Fig. 2. The inverse randomizer 25 restores the information of the watermark that has been randomized to the original state. The information of the watermark is obtained from the inverse randomizer 25. The information of the watermark is output from an output terminal 26. Corresponding to key information contained in the information of the watermark, a decrypting process is performed for audio data as content data that has been encrypted.

Fig. 4 shows an example of a recording apparatus that records a file of data of a content to a record medium in such a manner that key information used for decrypting data of an encrypted data portion is contained in information of a watermark of a plain data portion followed by the encrypted data portion as shown in Fig. 1A and 1B. In the example shown in Fig. 4, as the record medium, an optical disc such as a CD-R (Compact Disc Recordable) or a CD-RW (Compact Disc Rewritable) is used.

In the recording apparatus shown in Fig. 4, data of a content is supplied to an input terminal 51. The data of the content is supplied from the input terminal 51 to a watermark adding circuit 53.

Data of a watermark is supplied to an input terminal 52. The data of the watermark is supplied from the input terminal 52 to a watermark generating circuit 54. The data of the watermark contains copy management information and reproduction management information. In addition, the data of the watermark contains key information used for decrypting the data of the content of the encrypted data portion preceded by the plain data portion. An output of the watermark generating circuit 54 is supplied to a watermark adding circuit 53.

The watermark adding circuit 53 adds the information of the watermark to the data of the content supplied from the input terminal 51.

To add or embed a watermark to data of a content, for example, a method for spreading information of a watermark by spectrum spreading so as to superimpose the spread information to data of a content, a method for detecting a peak value of a signal of data of a content and inserting a watermark before and after the peak value so that the watermark does not adversely affect the data of the content, a method for inserting information of a watermark into a low order bit of data of a content, a method for inserting information of a watermark into a high order coefficient of compressed data of a content, or the like can be used.

An output of the watermark adding circuit 53 is supplied to a switch circuit 55. The switch circuit 55 selects a plain data portion or an encrypted data portion that compose data of a content corresponding to an output of a plain/encrypted data selection signal generating circuit 56.

When a portion of data of the content supplied from the input terminal 51 is a plain data portion shown in Fig. 1A, the switch circuit 55 is placed on a terminal 55A side. Thus, the watermark adding circuit 53 adds the data of the watermark to the data of the content supplied form the input terminal 51. The resultant data is supplied to a multiplexer 57 through the switch circuit 55. At that point, the watermark generating circuit 54 outputs copy management information and reproduction management information as the data of the watermark. In addition, the watermark generating circuit 54 outputs key information used for decrypting the data of the content of the encrypted data portion preceded by the plain data portion.

When a portion of the data of the content supplied from the input terminal 51 is an encrypted data portion shown in Fig. 1A, the switch circuit 55 is placed on a terminal 55B side. Thus, the watermark adding circuit 53 adds the watermark to the data of the content supplied from the input terminal 51. The resultant data is supplied to an encrypting circuit 58 through the switch circuit 55. An encryption key is supplied from the watermark generating circuit 54 to the encrypting circuit 58. In addition, an encryption key is supplied from a key generating circuit 59 to the encrypting circuit 58.

As described above, in the example, using a first encryption key that is output from the watermark generating circuit 54 and that is contained in the information of the watermark, the data of the content is encrypted. In addition, using a second encryption key that is output from the key generating circuit 59, the data of the content is encrypted. Information used for decrypting the second key information supplied form the key generating circuit 59 is contained in a lead-in area of a disc, wobbled data in the tracking direction of a disc, sub code data, or TOC (Table Of Content) data.

When two stages of encoding processes are performed, a copy operation, a reproducing operation, and so forth can be more securely managed for data of a content. In addition, it is difficult to rewrite information of a watermark, whereas lead-in area of a disc, sub code data, TOC data, and so forth can be rewritten. Thus, each user can use an encrypting process with the second encryption key.

When all a file of a content is encrypted, regardless of a plain data portion or an encrypted data portion that composes data of the content, the switch circuit 55 is placed on the terminal 55B side. A plain data portion that composes the data of the content may be encrypted using the second encryption key supplied from the key generating circuit 59. An encrypted data portion that composes the data of the content may be encrypted dually using both the first encryption key supplied from the watermark generating circuit 54 and the second encryption key supplied from the key generating circuit 59.

Alternatively, only the plain data portion of the data of the content may be encrypted using the second encryption key supplied from the key generating circuit 59. In this case, using the second encryption key supplied from the key generating circuit 59, the data of the content and the watermark added thereto are encrypted. The watermark contains key information used for decrypting the first encryption. Thus, when the second encryption of the plain data portion is decrypted, the information of the watermark can be extracted from the plain data portion. Key information used for decrypting the first encryption is extracted from the information of the watermark. Thus, data of the encrypted data portion that composes the data of the content is decrypted.

An encrypting process may be performed in combination of the first encryption key and the second encryption key. Alternatively, an encrypting process may be performed in combination of the first encryption key and/or the second encryption key and another encryption key. For example, with the first encryption key and the second encryption key, another encryption key may be created. With the created encryption key, data of a content of an encrypted data portion may be encrypted.

The encrypting circuit 58 encrypts data of a content of an encrypted data portion using the encryption key supplied from the watermark generating circuit 54 and the encryption key supplied from the key generating circuit 59. The encrypted data is supplied to the multiplexer 57.

An output of the multiplexer 57 is supplied to an error correction code encoding circuit 60. The error correction code encoding circuit 60 performs an error correction code encoding process. Output data of the error correction code encoding circuit 60 is supplied to a modulating circuit 61. An output of the modulating circuit 61 is supplied to an optical pickup 63 through a recording amplifier 62. The data is recorded on an optical disc 64.

The second key information supplied from the key generating circuit 59 is supplied to a recording circuit 65. The recording circuit 65 records data to the lead-in area of the disc, wobbled area in track direction of the disc, or the TOC area of the disc.

When a plain data portion and an encrypted data portion that compose data of a content are recorded on an optical disc, it may be divided into an outer peripheral record area and an inner peripheral record area in which the plain data portion and the encrypted data portion are recorded, respectively.

In other words, as shown in Fig. 5, an optical disc can be divided into an inner peripheral area AR1 and an outer peripheral area AR2. Data can be recorded to the outer peripheral area AR2 at a higher record density (for example, twice record density) than the inner peripheral area AR1. Thus, in the case of the optical disc shown in Fig. 5, the inner peripheral area AR1 is a plain data record portion, whereas the outer peripheral area AR2 is an encrypted data record portion.

In the inner peripheral area AR1 of the optical disc, data of a content such as audio data is recorded as plain data. In addition, at least part of an encryption key is embedded as a watermark to data of a content. In the outer peripheral area AR2 of the optical disc, data of a content such as compressed data that is the same as audio data recorded in the inner peripheral area AR1 is encrypted and recorded.

Plain data and encrypted data recorded in the inner peripheral area AR1 and the outer peripheral area AR2, respectively, may be recorded as shown in Fig. 8A to Fig. 8C.

When an optical disc is reproduced, first of all, the inner peripheral area AR1 thereof is reproduced. At that point, data of a content recorded in a plain data portion on the inner periphery side of the optical disc is reproduced. In addition, key information embedded as a watermark and used for decrypting data of a content of an encrypted data portion is read from the watermark. Thereafter, the outer peripheral area AR2 of the optical disc is reproduced. As a result, data of a content that has been encrypted is read from the area AR2. The data of the content that has been reproduced from the area AR2 is decrypted using the key obtained from the watermark of the inner peripheral area AR1 of the optical disc.

Fig. 6 shows an example of a reproducing apparatus that reproduces an optical disc as a record medium on which a file of a content has been recorded in such a manner that key information used for decrypting data of an encrypted data portion is contained in information of a watermark of a plain data portion followed by the encrypted data portion.

In Fig. 6, data recorded on an optical disc 71 is read by an optical pickup 72. An output of the optical pickup 72 is supplied to a demodulating circuit 74 through a reproducing amplifier 73. The demodulating circuit 74 performs a demodulating process for the output signal of the optical pickup 72. An output signal as a demodulated signal of the demodulating circuit 74 is supplied to an error correcting circuit 75. The error correcting circuit 75 performs an error correcting process for the output signal as the demodulated signal of the demodulating circuit 74. An output of the error correcting circuit 75 is supplied to both a switch circuit 76 and a watermark detecting circuit 77. The watermark detecting circuit 77 decodes the data of the watermark.

The output signal of the optical pickup 72 is supplied to a key information extracting circuit 82. The key information extracting circuit 82 extracts key information recorded or embedded in the lead-in area, wobbled data in the tracking direction, sub code data, or TOC data of the disc therefrom.

The selecting operation of the switch circuit 76 is controlled by a plain/encrypted data selecting circuit 78. When a plain data portion is reproduced, the switch circuit 76 is placed on a terminal 76A side. Thus, data that is read from the optical disc 71 by the optical pickup 72 is demodulated by the demodulating circuit 74. Thereafter, the error correcting circuit 75 performs a correcting process for the data. Thereafter, the resultant data is supplied to a multiplexer 79 through the switch circuit 76.

The plain/encrypted data selecting circuit 78 selects a plain data portion or an encrypted data portion depending on whether the error correcting circuit 75 scans the inner peripheral area AR1 or the outer peripheral area AR2 of the disc shown in Fig. 5 and depending on what portion of data of the content shown in Fig. 1 is reproduced corresponding to a control signal supplied from a controller (not shown).

When data of an encrypted data portion recorded on the optical disc 71 is reproduced, the switch circuit 76 is placed on a terminal 76B side. Thus, when data of an encrypted data portion is reproduced, the reproduced data that is read from the optical disc 71 by the optical pickup 72 is demodulated by the demodulating circuit 74. Thereafter, the error correcting circuit 75 performs an error correcting process for the demodulated data. The resultant data is supplied to a decrypting circuit 80 through the switch circuit 76.

Key information supplied from the watermark detecting circuit 77 is supplied to the decrypting circuit 80. In addition, key information is supplied from the key information extracting circuit 82 to the decrypting circuit 80. In other words, key information used for decrypting data of an encrypted data portion is contained in data of a watermark of a plain data portion followed by the encrypted data portion. The watermark detecting circuit 77 detects data of a watermark of a plain data portion followed by encrypted data to be decrypted and extracts key information from the data of the watermark. The key information that has been detected and extracted by the watermark detecting circuit 77 is supplied from the watermark detecting circuit 77 to the decrypting circuit encrypted data decrypting circuit 80.

In addition to the key information, copy management information and reproduction management information are detected as information of a watermark detected by the watermark detecting circuit 77. These copy management information and reproduction management information are supplied to a controller (not shown). The controller controls a copy operation and a reproducing operation of the data of the content corresponding to the copy management information and the reproduction management information.

An encryption key may have been recorded in the lead-in area, wobbled data in the tracking direction, or TOC area of the disc. The encryption key is extracted by the key information extracting circuit 82. The key information is supplied from the key information extracting circuit 82 to the decrypting circuit 80.

For example, the decrypting circuit 80 performs a decrypting process for output data of the error correcting circuit 75 corresponding to the key information supplied from the key information extracting circuit 82. Thereafter, the decrypting circuit 80 performs a decrypting process corresponding to key information extracted by the watermark detecting circuit 77 so as to decrypt the output data of the error correcting circuit 75.

The decrypting circuit 80 performs a decrypting process for the data that had been encrypted and that has been read from the optical disc 71 using the key information that has been supplied from the watermark detecting circuit 77 and the key information that has been supplied from the multiplexer 79. The decrypted data is supplied to the multiplexer 79. An output of the multiplexer 79 is supplied to an output terminal 81. From the output terminal 81, a reproduced output of the data of the content recorded on the optical disc 71 is obtained.

In the above-described example, data of a content is divided into a plain data portion and an encrypted data portion. The plain data portion may be divided into a non-sound portion and a non-picture portion (namely, a portion that contains no information).

In other words, when an audio signal as data of a content is recorded, as shown in Fig. 7A, audio data (all "0") corresponding to non-sound is recorded in a plain data portion (non-sound data portion) A11. A watermark that contains encryption key information is embedded to audio data corresponding to non-sound. Audio data of a content is encrypted and recorded to an encrypted data portion B11.

When the disc is reproduced, key information embedded to the plain data portion A11 is read. Using the key information that is read from the plain data portion A11, audio data of a content that is recorded in the encrypted data portion B11 is decrypted and reproduced.

For example, normally, a plurality of music programs have been recorded on one CD. Between two adjacent music programs, there is a non-sound portion. For example, the non-sound portion between the two adjacent music programs is a plain data portion. In the plain data portion, a watermark that contains encryption key information is embedded. Thus, while a non-sound portion between two adjacent music programs is being reproduced, key information embedded as a watermark therebetween is read. When the music program preceded by the non-sound portion is reproduced, using the key information, the encrypted data is decrypted.

When data of a content is video data, as shown in Fig. 7B, data of which a screen is muted (for example fixed pattern data such as full blue, black, or white screen) is recorded in a plain data portion A21. Of course, such a fixed pattern screen may contain simple characters that represent a designated mode state or an alarm. Alternatively, a screen corresponding to a non-signal state may appear. When video data of no signal is reproduced, a random pattern screen such as snow noise appears. A watermark that contains encryption key information is embedded to data of the plain data portion A21. In an encrypted data portion B21, video data of a content is encrypted and recorded.

When the disc is reproduced, key information embedded as a watermark to the plain data portion A21 is read. Using the key information that is read from the plain data portion A21, data of a content recorded in the encrypted data portion B21 is decrypted and reproduced.

When a reproducing operation of a video content such as a movie is started, a blank screen such as a blue back screen appears. In the example, a watermark that contains encryption key information is embedded to a blue back screen that appears when the reproducing operation of the content is started. In this case, while the initial blue back portion is being reproduced, key information embedded as the content is read. When a video content preceded by the blue back portion is reproduced, using the key information, the encrypted data is decrypted.

In such a manner, when a plain data portion (a portion that contain no information data) is a non-information data portion such as non-sound of an audio signal or a blue back screen of a video signal, information embedded as additional information to a watermark can be always reproduced. In addition, all data of a content can be protected as encrypted data.

When data of a content of the record medium is copied while such data has been recorded on the record medium, since it may be thought that non-sound portion is unnecessary, the content may be copied without the non-sound portion. Since a watermark that contains key information used for decrypting encrypted data is recorded in the non-sound portion, if the content is copied without the non-sound portion, the content cannot be decrypted. As a result, the content can be protected from being illegally copied.

When information of which the user should be notified has been recorded to a plain data portion to which a watermark that contains encryption key information is embedded, unless he or she reproduces the information, a content of an encrypted data portion cannot be decrypted and reproduced.

In Fig. 8A, for example, video data of a screen that represents a producer of a content is recorded in a plain data portion A31. A watermark that contains key information used for decrypting video data recorded to an encrypted data portion B31 is embedded to the plain data portion A31. Video data of the content is encrypted and recorded to the encrypted data portion B31.

In Fig. 8B, video data of a screen that shows warning with respect to a copyright protection notice is recorded in a plain data portion A41. A watermark that contains key information used for decrypting video data recorded in an encrypted data portion B41 is embedded to the plain data portion A41. Video data of a content is encrypted and recorded in the encrypted data portion B41.

In Fig. 8C, video data of a screen of a commercial is recorded in a plain data portion A51. A watermark that contains key information used for decrypting video data recorded in an encrypted data portion B51 is embedded to the plain data portion A51. Video data of a content is encrypted and recorded in the encrypted data portion B51.

As shown in Fig. 8A, when video data of a screen that represents a producer of a content has been recorded in the plain data portion A31, as shown in Fig. 9A, while the screen, which represents the producer of the content, appears, the watermark is read. The key information used for decrypting the content preceded by the screen is extracted from the watermark. Thus, unless the user sees the screen representing the producer of the content, the screen of the content preceded by the screen representing the producer cannot be reproduced.

As shown in Fig. 8B, when video data of a screen showing warning with respect to a copyright protection notice has been recorded in the plain data portion A41, as shown in Fig. 9B, while the screen showing the warning with respect to the copyright protection notice appears, the watermark is read. The key information used for decrypting the content preceded by the screen is extracted from the watermark. Thus, unless the user sees the screen showing the warning with respect to the copyright protection notice, the screen of the content preceded by the screen of the warning cannot be reproduced.

As shown in Fig. 8C, when video data of the screen showing a commercial of a company has been recorded in the plain data portion A51, as shown in Fig. 9C, while the screen showing the commercial of the plain data portion A51 appears, the watermark is read. The key information used for decrypting the content preceded by the screen of the commercial is extracted from the watermark. Thus, unless the user sees the screen of the commercial shown in Fig. 9C, the screen of the content preceded by the screen of the commercial cannot be reproduced.

A content of a movie contains for example screens showing information about a copyright owner and a copy prohibition notice. When the user reproduces such a content, he or she should be noticed of such information. However, many users tend to skip screens showing such information. Thus, they cannot be thoroughly notified of a copyright notice, copy prohibition notice, and so forth. In contrast, as was described above, when a screen showing a copyright notice and a copy prohibition notice has been recorded in a plain data portion, unless the user sees such a screen, video data of a content cannot be reproduced. Thus, the user can be notified of a copyright notice and a copy prohibition notice. In addition, the screen causes the user to know who is the copyright owner.

Assuming that a content of a video data of a movie contains a commercial of a company that is a sponsor of the content, many users tend to skip the commercial portion when they reproduce the content. When the users skip the commercial portion, the company that is a sponsor of the content can neither achieve sufficient commercial effects, nor correct the advertisement cost. In contrast, as was described above, when a commercial has been recorded in a plain data portion, unless the user sees the commercial, video data of the content cannot be reproduced. Thus, according to the present invention, the user cannot but see the commercial. Thus, the sponsor does not lose the effect of the commercial.

In the above-described examples, as information of which the user should be notified, a screen that represents a producer of a content, a screen showing warning with respect to copyright protection, and a screen showing a commercial were described. As for such information, various types are considerable. For example, a screen as an interval of a long time movie and a program guide screen/sound of a music content can be considered. As for games, a screen that represents a producer is considerable. Other various types can be considered.

According to the present invention, a file of a content is divided into a plain data portion in which data of the content that has not been encrypted is recorded and an encrypted data portion in which data of the content that has been encrypted is recorded. In the plain data portion, data of the content that has not been encrypted is recorded. In the encrypted data portion, data of the content that has been encrypted is recorded. In addition, at least part of a key used for decrypting the encrypted data is embedded as additional information to the data of the content of the plain data portion.

When the file is reproduced, using key information contained in a watermark superimposed to data of a content of a plain data portion, a decrypting process is performed for data of an encrypted data portion preceded by the plain data portion.

Thus, unless information of a watermark is detected, data of an encrypted data portion cannot be reproduced. Consequently, the information of the watermark is always reproduced. As a result, information used for managing copy operation and reproducing operation is always obtained from the watermark. Consequently, the copyright can be securely managed with the watermark.

When information of which the user should be noticed has been recorded in a plain data portion to which a watermark that contains encryption key information is embedded, unless the user reproduces the information, a content of an encrypted data portion cannot be decrypted and reproduced.

Thus, when a screen showing a copyright notice and a copy prohibition notice has been recorded in a plain data portion, unless the user sees the screen, video data of a content cannot be reproduced. As a result, the user can be noticed of a copyright notice and a copy prohibition notice. When a commercial has been recorded in a plain data portion, unless the user sees the commercial, video data of a content cannot be reproduced. Thus, the sponsor securely causes the user to see the commercial. As a result, the sponsor does not lose the effect of the commercial.

### Industrial Utilization

According to the present invention, with a watermark added or embedded to data of a content, the data of the content can be suitably protected.

## Claims

1. Content data composed of an encrypted data portion and a plain data portion, the encrypted data portion being composed of data of a content that has been encrypted, additional information data being embedded to the plain data portion, the additional information data containing information used for decrypting the data of the content that has been encrypted, the plain data portion being placed at least before or after the encrypted data portion.

2. Content data composed of an encrypted data portion and a plain data portion, the encrypted data portion being composed of data of a content that has been encrypted, additional information data being embedded to the plain data portion, the additional information data containing information used for decrypting the data of the content that has been encrypted, the plain data portion being read before the encrypted data portion.

3. A record medium, having:
a first record area in which encrypted data is recorded; and
a second record area placed at a position that allows said second record area to be read before said first record area, plain data being recorded in said second record area, additional information being embedded to the plain data, the additional information being used for decrypting the encrypted data recorded in said first record area.

4. The record medium as set forth in claim 3,
wherein said second record area is placed on an inner periphery side of said first record area.

5. The record medium as set forth in claim 3,
wherein the additional information is spectrum-spread and superimposed to the plain data.

6. The record medium as set forth in claim 3,
wherein the additional information is inserted into a low order bit of the plain data.

7. The record medium as set forth in claim 3,
wherein the additional information is inserted into a high order coefficient of compressed data of the plain data.

8. The record medium as set forth in claim 3,
wherein the additional information is inserted into the plain data using a masking effect in such a manner that the additional information does not adversely affect the plain data.

9. The record medium as set forth in claim 3,
wherein the additional information is inserted into a first peak, a second peak, or the vicinity thereof in a predetermined range of the plain data.

10. The record medium as set forth in claim 3,
wherein the additional information contains at least one of copy management information for performing a copy management for the encrypted data and reproduction management information for performing a reproduction management for the encrypted data.

11. A recording method for a record medium, comprising the steps of:
adding to a first portion of data of a content that has been input additional information containing information used for performing a decryption;
performing an encrypting process for a second portion of the data of the content that has been input corresponding to the information used for performing the decryption; and
performing an encoding process for the first portion to which the additional information has been added and the second portion for which the encrypting process has been performed in such a manner that the first portion and the second portion are recorded to the record medium.

12. The recording method as set forth in claim 11,
wherein the first portion is read before the second portion.

13. The recording method as set forth in claim 11,
wherein the additional information is spectrum-spread and superimposed to the first portion.

14. The recording method as set forth in claim 11,
wherein the additional information is inserted into a low order bit of the first portion.

15. The recording method as set forth in claim 11,
wherein the additional information is inserted into a high order coefficient of compressed data of the first portion.

16. The recording method as set forth in claim 11,
wherein the additional information is inserted into the first portion using a masking effect in such a manner that the additional information does not adversely affect the first portion.

17. The recording method as set forth in claim 11,
wherein the additional information is inserted into a first peak, a second peak, or the vicinity thereof in a predetermined range of the first portion.

18. The recording method as set forth in claim 11,
wherein after the first portion to which the additional information has been added and the second portion for which the encoding process has been performed are multiplexed, the encoding process is performed therefor.

19. The recording method as set forth in claim 18,
wherein after another encrypting process is performed for the second portion, the second portion for which the other encrypting process has been performed is multiplexed with the first portion.

20. The recording method as set forth in claim 19,
wherein information used for decrypting the other encrypting process is recorded at a predetermined portion of the record medium.

21. The recording method as set forth in claim 20,
wherein the information used for decrypting the other encrypting process is recorded to a lead-in area of the record medium.

22. The recording method as set forth in claim 20,
wherein the information used for decrypting the other encrypting process is recorded to the record medium along with index information.

23. The recording method as set forth in claim 20,
wherein the information used for decrypting the other encrypting process is recorded to the record medium in such a manner that a record track of the record medium is wobbled in the radius direction thereof.

24. The recording method as set forth in claim 11,
wherein after the other encrypting process is performed for the first portion to which the additional information has been added and the second portion for which the encrypting process has been performed, the first portion and the second portion for which the other encrypting process has been performed are recorded to the record medium.

25. The recording method as set forth in claim 24,
wherein information used for decrypting the other encrypting process is recorded at a predetermined portion of the record medium.

26. The recording method as set forth in claim 24,
wherein the information used for decrypting the other encrypting process is recorded to a lead-in area of the record medium.

27. The recording method as set forth in claim 24,
wherein the information used for decrypting the other encrypting process is recorded to the record medium along with index information.

28. The recording method as set forth in claim 24,
wherein the information used for decrypting the other encrypting process is recorded to the record medium in such a manner that a record track of the record medium is wobbled in the radius direction thereof.

29. A recording apparatus, comprising:
an additional information generating portion for generating additional information containing information used for performing a decryption;
an adding circuit portion for embedding the additional information generated by said additional information generating portion to a first portion of data of a content that has been input;
an encrypting process portion for performing an encrypting process for a second portion of the data of the content that has been input corresponding to the information used for performing the decryption;
an encoding process portion for multiplexing an output of said encryption process portion and an output of said adding circuit portion and performing an encoding process for the multiplexed data in such a manner that the encoded data is recorded to the record medium; and
a recording portion for recording an output of the said encoding process portion to the record medium.

30. The recording apparatus as set forth in claim 29,
wherein said encrypting process portion performs another encrypting process for the second portion corresponding to another encryption key.

31. The recording apparatus as set forth in claim 30,
wherein other information used for performing a decryption for the second portion for which the other encrypting process has been performed corresponding to the other encryption key is recorded to the record medium.

32. The recording apparatus as set forth in claim 31,
wherein other information used for decrypting the other encrypting process is recorded at a predetermined portion of the record medium.

33. The recording apparatus as set forth in claim 31,
wherein the other information used for decrypting the other encrypting process is recorded to a lead-in area of the record medium.

34. The recording apparatus as set forth in claim 31,
wherein the other information used for decrypting the other encrypting process is recorded to the record medium along with index information.

35. The recording apparatus as set forth in claim 31,
wherein the other information used for decrypting the other encrypting process is recorded to the record medium in such a manner that a record track of the record medium is wobbled in the radius direction thereof.

36. The recording apparatus as set forth in claim 29,
wherein said adding circuit portion spectrum-spreads the additional information and superimposes the resultant information to the first portion.

37. The recording apparatus as set forth in claim 29.
wherein said adding circuit portion inserts the additional information into a low order bit of the first portion.

38. The recording apparatus as set forth in claim 29,
wherein said adding circuit portion inserts the additional information into the first portion using a masking effect in such a manner that the additional information does not adversely affect the first portion.

39. The recording apparatus as set forth in claim 29,
wherein said adding circuit portion inserts the additional information into a first peak, a second peak, or the vicinity thereof in a predetermined range of the first portion.

40. The recording apparatus as set forth in claim 29, further comprising:
a switch circuit portion for selectively supplying an output of said adding information portion to said encoding process portion or said encrypting process portion.

41. The recording apparatus as set forth in claim 40,
wherein said switch circuit portion supplies the first portion to said encoding process portion and the second portion to said encrypting process portion.

42. A reproducing apparatus, comprising:
a head portion for scanning a record medium on which at least data of a content and index information thereof have been recorded, the data of the content having a first portion and a second portion, additional information containing information used for performing a decryption having been embedded to the first portion, an encrypting process corresponding to the information used for performing the decryption having been performed for the second portion;
an extracting portion for extracting the information used for performing the decryption from the first portion of the data of the content that has been read from the record medium by said head portion; and
a decrypting process portion for performing a decrypting process for the second portion of the data of the content that has been read from the record medium by said head portion corresponding to the information used for performing the decryption that has been extracted by said extracting portion.

43. The reproducing apparatus as set forth in claim 42, further comprising:
a decoder portion for performing a signal process for reproducing an output signal of said head portion; and
a mixing circuit portion for multiplexing an output of said decoder portion and an output of said decrypting process portion.

44. The reproducing apparatus as set forth in claim 43, further comprising:
a switch circuit portion for selectively supplying the output of said decoder portion to said mixing circuit portion or said decrypting process portion.

45. The reproducing apparatus as set forth in claim 44,
wherein when the first portion of the data of the content is output from said decode portion, said switch circuit portion is switched so that the output of said decoder is supplied to said mixing circuit portion, and when the second portion of the data of the content is output from said decode portion, said switch circuit portion is switched so that the output of said decoder portion is supplied to said decrypting process portion.

46. The reproducing apparatus as set forth in claim 43,
wherein another encrypting process has been performed for the second portion of the data of the content, other information used for performing another decryption having been recorded to the record medium,
wherein the reproducing apparatus further comprises:
a detecting portion for detecting the other information from the output of said decoder portion, and
wherein said decrypting portion performs another decrypting process for the second portion for which the other encrypting process has been performed corresponding to the other information detected by said detecting portion.

47. A reproducing method, comprising the steps of:
extracting information used for performing a decryption from a first portion of data of a content that has been read from a record medium on which at least the data of the content and index information thereof have been recorded, the data of the content having the first portion and a second portion, additional information containing the information used for performing the decryption having been embedded to the first portion, an encrypting process corresponding to the information used for performing the decryption having been performed for the second portion; and
performing a decrypting process for the second portion of the data of the content that has been read from the record medium corresponding to the information used for performing the decryption that has been extracted.

48. The reproducing method as set forth in claim 47,
wherein another encrypting process has been performed for the second portion of the data of the content, other information used for performing another decryption having been recorded to the record medium, and
wherein the reproducing method further comprises the steps of:
reading the other information from the record medium, and
performing another decrypting process for the second portion for which the other encrypting process has been performed corresponding to the other information that has been read.

49. A reproducing method for a record medium, comprising the steps of:
reading plain data from the record medium on which content data composed of data of a content for which an encrypting process has been performed and the plain data have been recorded, the plain data being placed at a position that allows the plain data to be read before the data of the content, at least information used for performing a decryption for the data of the content for which the encrypting process has been performed;
extracting the information used for performing the decryption from the plain data that has been read;
performing a decrypting process for the data of the content that has been read from the record medium corresponding to the information used for performing the decryption that has been extracted; and
outputting the reproduced output of the plain data and the data of the content for which the decrypting process has been performed.

50. The reproducing method for the record medium as set forth in claim 49,
wherein the data of the content is audio data, and
wherein the plain data is mute data.

51. The reproducing method for the record medium as set forth in claim 49,
wherein the data of the content is video data, and
wherein the plain data is data representing a fixed pattern.

52. The reproducing method for the record medium as set forth in claim 49,
wherein the data of the content is video data, and
wherein the plain data is data with respect to a producer of the data of the content.

53. The reproducing method for the record medium as set forth in claim 49,
wherein the data of the content is video data, and
wherein the plain data is data with respect to copyright of the data of the content.

54. The reproducing method for the record medium as set forth in claim 49,
wherein the data of the content is video data, and
wherein the plain data is data with respect to a commercial.

55. The reproducing method for the record medium as set forth in claim 49,
wherein another encrypting process has been performed for the data of the content, other information used for performing another decryption having been recorded to the record medium, and
wherein the reproducing method for the record medium further comprises the steps of:
reading the other information from the record medium, and
performing a signal for the data of the content for which the other encrypting process has been performed corresponding to the other information that has been read.

56. A reproducing method for data, comprising the steps of:
reading plain data from content data composed of data of a content for which an encrypting process has been performed and the plain data have been recorded, the plain data being read before the data of the content, at least information used for performing a decryption for the data of the content for which the encrypting process has been performed;
extracting the information used for performing the decryption from the plain data that has been read;
performing a decrypting process for the data of the content that has been read corresponding to the information used for performing the decryption that has been extracted; and
outputting the reproduced output of the plain data and the data of the content for which the decrypting process has been performed.

57. The reproducing method for the data as set forth in claim 56,
wherein the data of the content is audio data, and
wherein the plain data is mute data.

58. The reproducing method for the data as set forth in claim 56,
wherein the data of the content is video data, and
wherein the plain data is data representing a fixed pattern.

59. The reproducing method for the data as set forth in claim 56,
wherein the data of the content is video data, and
wherein the plain data is data with respect to a producer of the data of the content.

60. The reproducing method for the data as set forth in claim 56,
wherein the data of the content is video data, and
wherein the plain data is data with respect to copyright of the data of the content.

61. The reproducing method for the data as set forth in claim 56,
wherein the data of the content is video data, and
wherein the plain data is data with respect to a commercial.

62. The reproducing method for the data as set forth in claim 56,
wherein the information used for performing the decryption is spectrum-spread and superimposed to the plain data.

63. The reproducing method for the data as set forth in claim 56,
wherein the information used for performing the decryption is inserted into a low order bit of the plain data.

64. The reproducing method for the data as set forth in claim 56,
wherein the information used for performing the decryption is inserted into a high order coefficient of compressed data of the plain data.

65. The reproducing method for the data as set forth in claim 56,
wherein the information used for performing the decryption is inserted into the plain data using a masking effect in such a manner that the information used for performing the decryption does not adversely affect the plain data.

66. The reproducing method for the data as set forth in claim 56,
wherein the information used for performing the decryption is inserted into a first peak, a second peak, or the vicinity thereof in a predetermined range of the plain data.

67. The reproducing method for the data as set forth in claim 56,
wherein the plain data contains at least one of copy management information for performing a copy management for the encrypted data and reproduction management information for performing a reproduction management for the encrypted data.
